## Europäisches Patentamt

## European Patent Office

## Office européen des brevets

(11) Veröffentlichungsnummer: **0 058 750**
**B1**

(12) **EUROPÄISCHE PATENTSCHRIFT**

(45) Veröffentlichungstag der Patentschrift:
03.07.85

(51) Int. Cl.⁴: **H 04 Q 11/04**

(21) Anmeldenummer: 81108369.0

(22) Anmeldetag: 15.10.81

(54) Schaltungsanordnung für Zeitmultiplex-Fernmeldevermittlungsanlagen, insbesondere PCM-Fernsprechvermittlungsanlagen, mit Datenwegen zwischen einem zentralen Steuerwerk und dezentralen Steuereinrichtungen.

(30) Priorität: 24.02.81 DE 3106903

(43) Veröffentlichungstag der Anmeldung:
01.09.82 Patentblatt 82/35

(45) Bekanntmachung des Hinweises auf die Patenterteilung:
03.07.85 Patentblatt 85/27

(84) Benannte Vertragsstaaten:
AT CH FR GB IT LI NL SE

(73) Patentinhaber: Siemens Aktiengesellschaft, Berlin und München Wittelsbacherplatz 2, D-8000 München 2 (DE)

(72) Erfinder: Troost, Marcel Abraham, Dipl.-Ing.,
Gabriele-Münter-Strasse 25, D-8000 München 71 (DE)
Erfinder: Neufang, Karlheinz, Nebelhornstrasse 77a,
D-8000 München 21 (DE)

(56) Entgegenhaltungen:
EP - A - 0 015 524

INTERNATIONAL SWITCHING SYMPOSIUM 6. - 9. Juni 1972, Cambridge, Mass. NEW YORK (US) K.E. WUHRMANN: "System IFS-1, the Network Configuration" Seiten 65-72
TELCOM REPORT, Band 4, 1981, Beiheft Digitalvermittlungssystem EWSD. 1. April 1981 MÜNCHEN (DE) K: NEUFANG: "Das Digitalkoppelnetz im System EWSD" Seiten 28-32
RECHNERGESTEUERTE VERMITTLUNGSSYSTEME, R. GERKE, SPRINGER-VERLAG, BERLIN (DE), SEITEN 36-44 UND 206-207

## Beschreibung

Durch die deutsche Offenlegungsschrift 2 826 113 ist bereits eine Schaltungsanordnung für zentralgesteuerte Zeitmultiplex-Fernmeldevermittlungsanlagen, insbesondere PCM-Fernsprechvermittlungsanlagen, bekannt, mit einem mehrstufigen, Zeitmultiplex-Eingänge und Zeitmultiplex-Ausgänge aufweisenden Koppelfeld, und mit einer Mehrzahl von einem Anschluss von Zeitmultiplex-Verbindungsleitungen, Analog-Verbindungsleitungen und/oder Analog-Teilnehmerleitungen dienenden Anschlusseinrichtungen, von denen jede an einen Zeitmultiplexeingang und einen Zeitmultiplexausgang des Koppelfeldes angeschlossen ist, und mit wenigstens einem zentralen Steuerwerk und mehreren, den Anschlusseinrichtungen individuell zugeordneten dezentralen Steuereinrichtungen, die mit dem Steuerwerk über Datenkanäle in Verbindung stehen, die über das Koppelfeld durchgeschaltet werden und ständig in übertragungsbereitem Betriebszustand erhalten werden, und mit einer dem Steuerwerk zugeordneten und mit ihm verbundenen Steuerwerk-Anschlusseinrichtung, die ebenso wie die anderen Anschlusseinrichtungen mit dem Koppelfeld verbunden ist. In einer solchen Schaltungsanordnung wird also das der Durchschaltung der Verbindungswege, z.B. der Sprechwege, dienende Zeitmultiplexkoppelfeld zusätzlich dazu ausgenutzt, die Datenwege zwischen zentralem Steuerwerk und dezentralen Steuereinrichtungen bereitzustellen. Das der Verbindungsdurchschaltung dienende Koppelfeld ist hierzu nur geringfügig stärker zu bemessen hinsichtlich seiner Verkehrsbelastbarkeit. Da jedoch den Datenwegen, über die das zentrale Steuerwerk Befehle an die dezentralen Steuereinrichtungen abzusetzen hat und über die die dezentralen Steuereinrichtungen ihre Meldungen an das zentrale Steuerwerk abzugeben haben, eine hohe Bedeutung zukommt im Hinblick auf die Funktionsfähigkeit und Betriebssicherheit einer solchen Vermittlungsanlage, müssen wesentlich höhere Anforderungen hinsichtlich Zuverlässigkeit und Betriebssicherheit an das Koppelfeld gestellt werden.

Die Erfindung betrifft eine Schaltungsanordnung für zentralgesteuerte Zeitmultiplex-Fernmeldevermittlungsanlagen, insbesondere PCM-Fernsprechvermittlungsanlagen, mit einem mehrstufigen, Zeitmultiplex-Eingänge und Zeitmultiplex-Ausgänge aufweisenden Koppelfeld, und mit einer Mehrzahl von einem Anschluss von Zeitmultiplex-Verbindungsleitungen, Analog-Verbindungsleitungen und/oder Analog-Teilnehmerleitungen dienenden Anschlusseinrichtungen, von denen jede an einem Zeitmultiplex-Eingang und einen Zeitmultiplexausgang des Koppelfeldes angeschlossen ist, und mit wenigstens einem zentralen Steuerwerk und mehreren, den Anschlusseinrichtungen individuell zugeordneten dezentralen Steuereinrichtungen, die mit dem Steuerwerk über Datenkanäle in Verbindung stehen, die über das Koppelfeld durchgeschaltet werden, ständig in übertragungsbereitem Betriebszustand erhalten werden und einen Verlauf über das Koppelfeld aufweisen, aufgrund dessen jeder der Zeitmultiplex-Eingänge und jeder der Zeitmultiplex-Ausgänge des Koppelfeldes und jede seiner Zeitmultiplexzwischenleitungen wenigstens je einen Datenkanal führt, und mit einer dem Steuerwerk zugeordneten und mit ihm verbundenen Steuerwerk-Anschlusseinrichtung, die ebenso wie die anderen Anschlusseinrichtungen mit dem Koppelfeld verbunden ist und über die das Steuerwerk mit den Steuereinrichtungen der anderen Anschlusseinrichtungen in einem sämtliche Datenkanäle in Anspruch nehmenden und der Überwachung der Funktionsfähigkeit sämtlicher Zeitmultiplexzwischenleitungen des Koppelfeldes dienenden Datenaustausch steht.

Eine Schaltungsanordnung der zuvor angegebenen Art ist bereits dem Konferenzpapier «INTERNATIONAL SWITCHING SYMPOSIUM», Seiten 65 bis 72 zu entnehmen (dieses Symposium fand vom 6. bis 9. Juni 1972 in Massachusetts/USA statt). Dieses Konferenzpapier zeigt unter anderem ein gefaltetes Koppelfeld («network»), in dem die Zeitmultiplex-Koppeleinrichtungen («switches») ungerichtet sind, also nicht auf eine Übertragungsrichtung beschränkt sind, sondern bidirektional arbeiten. Sind die Zeitmultiplex-Koppeleinrichtungen ungerichtet, so müssen es auch die Zwischenleitungen sein. Ein Koppelfeld mit bidirektional arbeitenden Zeitmultiplex-Koppeleinrichtungen und Zeitmultiplexzwischenleitungen erfordert wesentlich komplizierter aufgebaute Koppelelemente (was inbesondere die Zeitlagen-Koppelvielfache mit ihren Vollspeichern betrifft) als ein Koppelfeld mit unidirektional arbeitenden Zeitmultiplex-Koppeleinrichtungen und Zeitmultiplexzwischenleitungen, erfordert also einen höheren technischen Aufwand.

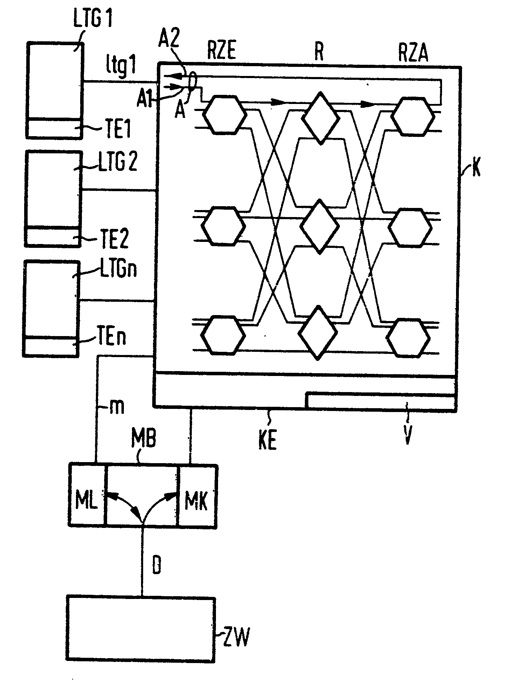

Das genannte Konferenzpapier offenbart nun bereits den Gedanken, die zwischen zentralem Steuerwerk und peripheren Einrichtungen ständig durchgeschalteten Steuerdatenkanäle, über die laufend zu Kontrollzwecken Prüfsignale übertragen werden, so über das Koppelfeld zu führen, dass jede der Zeitmultiplexzwischenleitungen wenigstens je einen solchen Datenkanal führt. Dadurch kann das gesamte Koppelfeld hinsichtlich Zeitmultiplex-Koppeleinrichtungen und hinsichtlich Zeitmultiplex-Zwischenleitungen ständig auf seine volle Funktionsfähigkeit hin überwacht werden. Es ist nun aber festzustellen, dass dieses Konferenzpapier nichts darüber sagt, wie zu diesem Zweck hier der Verlauf der Datenkanäle gestaltet ist. Dies scheint aber im bekannten Falle auch kein besonderes Problem darzustellen. Wenn man nämlich davon ausgeht, dass hier in Figur 1 auf der Oberseite Zeitmultiplexleitungen von der Peripherie her angeschlossen sind, von denen ja jede einen solchen Datenkanal führt, so liegen hier an der Oberseite jedes der Zeitmultiplex-Koppelvielfache der oberen Koppelvielfachreihe je mehrere (fünf) Datenkanäle (da ja jede der an dieser Oberseite angeschlossenen Zeitmultiplexleitungen wenigstens je einen Datenkanal führt); und diese Datenkanäle sind über die Zeitmultiplex-Koppelvielfache der oberen Reihe so zu den Zeitmultiplex-Koppelvielfachen der unteren Reihe weiter durchgeschaltet, dass von den drei Zeitmultiplex-Zwischenleitungen, die jeweils von einem Zeitmultiplex-Koppelvielfach der oberen Reihe zu den sämtlichen (drei) Zeitmultiplex-Koppelvielfachen der unteren Reihe führen, jeweils eine (Zeitmultiplex-Zwischenleitung) wenigstens je einen solchen Datenkanal führt. Dies lässt sich aufgrund der Tatsache bei einer Anordnung gemäss dem oben genannten Konferenzpapier deshalb leicht realisieren, weil das hier verwendete Koppelfeld hinsichtlich der verwendeten Koppelvielfache und Zwischenleitungen bidirektional ist.

Wie aber bereits erwähnt ist, machen Koppelfelder mit bidirektional arbeitenden Koppelvielfachen und Zwischenleitungen einen besonderen Aufwand erforderlich.

Für die Erfindung besteht die Aufgabe, eine Schaltungsanordnung mit den angegebenen bekannten Merkmalen aufwandsparend zu gestalten und eine Überwachung der Funktionsfähigkeit sämtlicher Zeitmultiplex-Zwischenleitungen eines Koppelfeldes unabhängig von der einschränkenden Bedingung zu ermöglichen, dass Koppelvielfache und Zwischenleitungen des Koppelfeldes bidirektional arbeiten.

Die Erfindung löst die gestellte Aufgabe dadurch, dass das Koppelfeld aus unidirektionalen Zeitmultiplex-Koppeleinrichtungen und unidirektionalen Zeitmultiplex-Zwischenleitungen aufgebaut ist, dass die Steuerwerk-Anschlusseinrichtung über einen Zeitmultiplex-Eingang und einen Zeitmultiplex-Ausgang des Koppelfeldes nur mit je einer Zeitmultiplex-Koppeleinrichtung der ersten Koppelstufe und einer Zeitmultiplex-Koppeleinrichtung der letzten Koppelstufe verbunden ist, dass die von dem Steuerwerk zu den Steuereinrichtungen durchgeschalteten Datenkanäle über Zeitmultiplex-Zwischenleitungen verlaufen, die von der mit der Steuerwerk-Anschlusseinrichtung verbundenen Zeitmultiplex-Koppeleinrichtung der ersten Koppelstufe zu jeder der an einer bestimmten Schnittstelle innerhalb des Koppelfeldes liegenden Zeitmultiplex-Koppeleinrichtungen aufgefächert sind, dass die von den Steuereinrichtungen zu dem Steuerwerk durchgeschalteten Datenkanäle über Zeitmultiplex-Zwischenleitungen verlaufen, die von jeder der genannten Zeitmultiplex-Koppeleinrichtungen an der bestimmten Schnittstelle her zu dem mit der Steuerwerk-Anschlusseinrichtung verbundenen Zeitmultiplex-Koppeleinrichtung der letzten Koppelstufe zusammenlaufen, dass die von den Steuereinrichtungen zu dem Steuerwerk durchgeschalteten Datenkanäle über Zeitmultiplex-Zwischenleitungen verlaufen, die von jeder der Zeitmultiplex-Koppeleinrichtungen der ersten Koppelstufe zu allen an der bestimmten Schnittstelle innerhalb des Koppelfeldes liegenden Zeitmultiplex-Koppeleinrichtungen aufgefächert sind, und dass die von dem Steuerwerk zu den Steuereinrichtungen durchgeschalteten Datenkanäle über Zeitmultiplex-Zwischenleitungen verlaufen, die von sämtlichen Zeitmultiplex-Koppeleinrichtungen an der bestimmten Schnittstelle innerhalb des Koppelfeldes her zu jeder der Zeitmultiplex-Koppeleinrichtung der letzten Koppelstufe zusammenlaufen.

Die Tatsache, dass die Gesamtheit derjenigen Zeitmultiplex-Zwischenleitungen, die Datenkanäle einerseits für die eine Übertragungsrichtung und andererseits für die andere Übertragungsrichtung führen, zwei Fächer darstellen, von denen jeder nur einen Teil der Zeitmultiplex-Zwischenleitungen des Koppelfeldes umfasst, bildet den Kern des durch die Erfindung gelösten Problems. Denn auch beide Fächer zusammen vermögen bei Koppelfeldern mit einer anderen als bei der Erfindung angewendeten Koppelfeldgruppierung durchaus nicht sämtliche Zeitmultiplex-Zwischenleitungen des Koppelfeldes zu erfassen. Das hängt also ganz davon ab, welche Koppelfeldgruppierung verwendet wird. Würde man die in dem genannten Konferenzpapier dargestellte Koppelfeldgruppierung übernehmen und mit unidirektionalen Zeitmultiplex-Koppelvielfachen und -Zwischenleitungen aufbauen, also ein zweistufiges Koppelfeld verwenden, oder würde man die klassische symmetrische Koppelfeldgruppierung (sechsstufig oder vierstufig) verwenden, wie sie zum Beispiel in dem im Springer Verlag (Berlin/Heidelberg/New York) 1972 erschienenen Fachbuch von Peter R. Gerke «Rechnergesteuerte Vermittlungssysteme» auf den Seiten 43 und 206 dargestellt ist (diese Koppelfeldgruppierung ist vierstufig zum Beispiel bei den Koppelfeldern der Auslandsfernwahltechnik der Deutschen Bundespost verwendet), so würden sich jeweils zwei «Fächer» ergeben, die jedes Mal auch gemeinsam immer nur einen Teil der Zeitmultiplex-Zwischenleitungen des gesamten Koppelfeldes in dem hier behandelten Sinne erfassen würden. Wesentlich für die Erfindung ist also nicht nur, dass im Unterschied zu der Anordnung in dem genannten Konferenzpapier anstelle von bidirektionalen Zeitmultiplex-Zwischenleitungen und Zeitmultiplex-Koppelvielfachen unidirektionale Zeitmultiplex-Zwischenleitungen und Zeitmultiplex-Koppelvielfache verwendet werden, sondern ausserdem, dass eine solche Koppelfeldgruppierung unter der Vielzahl der möglichen Koppelfeldgruppierungen ausgewählt und verwendet ist, die gewährleistet, dass die beiden oben behandelten «Fächer» gemeinsam sämtliche Zeitmultiplex-Zwischenleitungen erfassen. Dieses Ziel wird durch die Erfindung erreicht.

In der Zeichnung ist ein Ausführungsbeispiel der Erfindung in nur wesentlich zu ihrem Verständnis beitragenden Bestandteilen dargestellt. Die Beschreibung richtet sich zunächst auf eine Anordnung, die den Gegenstand der Europäischen Patentanmeldung 0 059 242 umfasst; deren Gegenstand findet sich also in der vorliegenden Beschreibung wieder. Weiter unten konzentriert sich die Beschreibung speziell auf die erfindungsgemässen Zusammenhänge gemäss der vorliegenden Anmeldung. Ein in drei Koppelstufen RZE, R und RZA aufgebautes Koppelfeld K weist eingangsseitig eine grössere Anzahl von Koppelfeldanschlüssen auf, von denen einer dargestellt und mit A bezeichnet ist. Ein solcher Koppelfeldanschluss umfasst immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfasst der Koppelfeldanschluss A eine Zeitmultiplexleitung A1 und eine Zeitmultiplexleitung A2. Für jede dieser beiden Zeitmultiplexleitungen ist die jeweilige Signalübertragungseinrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine grössere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z.B. A, des Koppelfeldes K sind über für jeweils beide Nachrichtenübertragungsrichtungen ausgelegte Zeitmultiplexleitungen, z.B. die Zeitmultiplexleitung ltg1, Anschlussgruppen, z.B. die Anschlussgruppe LTG (Line Trunk Group), einzeln angeschlossen. Eine solche Anschlussgruppe ist eingangsseitig beliebig mit Teilnehmerleitungen (analog), Analog-Verbindungsleitungen und mit PCM-Verbindungsleitungen (alternativ sowie auch in Kombination) beschaltbar. In einer Anschlussgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652, und 1978 International Zurich Seminar on Digital Communications, Proccedings IEEE Catalogue Nr. 78 CH 1325-0 ASST, Seiten B2. 1,A4.1). Bei diesen Anschlussgruppen handelt es sich um an die Anschlüsse des mehrstufigen Koppelfeldes K einzeln angeschlossene Einrichtungen (LTG), in welchen die über das Koppelfeld nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen. Hierzu ist in Zusammenhang mit der erwähnten Codierung und Decodierung und mit den Multiplexern und Demultiplexern eine Zwischenspeicherung der PCM-Informationen pro Verbindung vorgesehen. Für einen Anschluss von PCM-Verbindungsleitungen, die zu anderen Vermittlungsstellen führen oder von diesen herangeführt sind, können auch Ausgleichsspeicher zum Rahmenausgleich bezüglich der Informationsübertragung über diese PCM-Verbindungsleitungen in den Anschlussgruppen vorgesehen sein. In ihnen können also jeweils alle zum Anschluss der oben genannten Leitungen (in der Zeichnung links von LTG) erforderlichen zuvor aufgeführten Schaltmittel oder auch nur die jeweils funktionsbedingt erforderlichen vorgesehen sein.

Ein zentrales Steuerwerk ZW dient u.a. zur Herstellung der über das Koppelfeld K aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u.a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z.B. in der DE-PS 1 537 849 (VPA 67/3047) ausführlich beschrieben.

Ausser dem zentralen Steuerwerk ZW ist eine grössere Anzahl von dezentralen Steuereinrichtungen TE1 bis TEn dargestellt, die jeweils den Anschlussgruppen LTG1 bis LTGn individuell zugeordnet sind. Diese Steuereinrichtungen dienen zur Durchführung sämtlicher Schaltvorgänge innerhalb jeder der genannten Anschlussgruppen. Zu diesen Schaltvorgängen gehören insbesondere sämtliche Vermittlungsvorgänge innerhalb dieser Anschlussgruppen. Weitere Einzelheiten hierüber können der bereits eingangs angegebenen DE-OS entnommen werden.

Die dezentralen Steuereinrichtungen TE1 bis TEn stehen mit dem zentralen Steuerwerk ZW über Datenkanäle in Verbindung, die einzeln pro dezentrale Steuereinrichtung über das Koppelfeld K bis zur Puffereinrichtung MB durchgeschaltet sind. Von dieser Puffereinrichtung, und zwar von ihrem Datenkopf ML führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse K angeschlossen. Die Puffereinrichtung ist an einem der Koppelfeldanschlüsse des Koppelfeldes K in der gleichen Weise angeschlossen, wie jede der genannten Anschlussgruppen LTG1 bis LTGn.

Die Zeitmultiplexleitung m ist also an einen Koppelfeldanschluss angeschaltet, der einen Zeitmultiplexeingang zu einem Raumlagen-Zeitlagen-Vielfach der ersten Koppelstufe und einen Zeitmultiplexausgang von einem Raumlager-Zeitlagen-Vielfach der letzten Koppelstufe umfasst. Die Zeitmultiplexleitung m ist also an einen Koppelfeldanschluss wie den mit A bezeichneten angeschaltet.

Jede Datenverbindung zwischen dem Datenkopf ML der Puffereinrichtung MB und einer jeden der Anschlussgruppen, z.B. der Anschlussgruppe LTG1, umfasst einen Kanal zur Übertragung von Daten von der Puffereinrichtung zur betreffenden Anschlussgruppe und einen weiteren Kanal zur Übertragung von Daten in der umgekehrten Richtung. Diese beiden Datenkanäle führen zu und von der der betreffenden Anschlussgruppe individuell zugeordneten dezentralen Steuereinrichtung.

Der Vollständigkeit halber sei an dieser Stelle hinzugefügt, dass die Puffereinrichtung MB auch über mehr als eine Zeitmultiplexleitung mit mehr als einem Koppelfeldanschluss des Koppelfeldes K verbunden sein kann.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nachrichtenverbindungen, z.B. Fernsprechverbindungen. Hierzu sind in an sich bekannter Weise den Koppelvielfachen des Koppelfeldes K Haltespeicher zugeordnet, in die jeweils ein Koppelvielfach betreffenden Vermittlungsdaten eingespeichert werden. Mit Hilfe dieser Haltespeicher wird bewerkstelligt, dass in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u.a. ein Datenkopf MK, der der Puffereinrichtung MB zugeordnet ist. Der Vollständigkeit halber sei an dieser Stelle hinzugefügt, dass mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines grösseren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlussgruppen LTG1 bis LTGn mit Hilfe des Koppelfeldes K durchgeschaltet sein müssen, bevor der Aufbau von Nachrichtenverbindungen, z.B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, dass die Koppelfeldeinstelleinrichtung KE ausserdem in einem ihr zugeordneten Speicher V Einstelldaten, d.h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlussgruppen LTG1 bis LTGn, d.h. ihren dezentralen Steuereinrichtungen TE1 bis TEn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Tritt z.B. eine Betriebsstörung ein, aufgrund deren die über das Koppelfeld K durchgeschalteten Verbindungen sämtlich verloren gehen, d.h. also auch die Datenverbindungen zwischen der Puffereinrichtung MB und den Anschlussgruppen bzw. den ihnen individuell zugeordneten dezentralen Steuereinrichtungen, so werden nach Behebung der Betriebsstörung zunächst sämtliche Datenverbindungen wieder neu aufgebaut. Die Vermittlungsdaten für diese Datenverbindungen brauchen aber nicht vom Zentralsteuerwerk ZW neu erarbeitet zu werden und brauchen auch nicht vom Zentralsteuerwerk über den zentralen Datenkanal D und die Puffereinrichtung MB zur Koppelfeldeinstelleinrichtung KE übertragen zu werden. Vielmehr gibt das Zentralsteuerwerk ZW lediglich einen entsprechenden Befehl über die Puffereinrichtung zur Koppelfeldeinstelleinrichtung KE hin ab, aufgrund dessen diese die in ihrem Speicher V gespeicherten Vermittlungsdaten entnimmt und zum Aufbau dieser Datenverbindungen verwendet. Dies kann für jede dieser Datenverbindungen einzeln nacheinander geschehen.

Die Koppelfeldeinstelleinrichtung KE führt die Abwicklung dieser Verbindungsherstellungsvorgänge durch. Dadurch werden im Hinblick auf die Bereitstellung der Datenverbindungen zwischen zentralem Steuerwerk und dezentralen Steuereinrichtungen die hierfür erforderlichen Schaltvorgänge der Betriebsabwicklung wesentlich vereinfacht. In diesem Zusammenhang ist besonders die bereits erwähnte Entlastung des zentralen Steuerwerkes ZW hervorzuheben, welches in der Wiederanlaufphase nach Belegung einer Betriebsunterbrechung, insbesondere infolge einer Betriebsstörung, einer besonders starken Belastung unterliegt, vornehmlich durch Routineprüfungen und ähnlichen routinemässigen Schaltungsabläufen im Zusammenhang mit Einschaltemassnahmen. Hierzu sei auf die DE-OS 28 42 317 (VPA 78 P 6240) hingewiesen.

Der erläuterten Speicherung der Vermittlungsdaten der einzelnen Datenverbindungen, die zwischen dem Datenkopf ML, der Puffereinrichtung MB und den dezentralen Steuereinrichtungen TE1 bis TEn der Anschlussgruppen LTG1 bis LTGn über das Koppelfeld K und über die für beide Übertragungsrichtungen ausgelegte Zeitmultiplexleitung m durchgeschaltet werden, im Speicher V der Koppelfeldeinstelleinrichtung MB kommt eine besondere Bedeutung unter dem Gesichtspunkt zu, dass mit einer Puffereinrichtung MB mehrere Koppelfeldeinstelleinrichtungen KE in Verbindung stehen und zusammenarbeiten. Unter dieser Voraussetzung erfährt die Puffereinrichtung MB, die u.a. die Aufgabe der Verteilung der vom zentralen Steuerwerk an die mehreren Koppelfeldeinstelleinrichtungen zu übertragenden Daten hat, eine besonders effektive Entlastung.

Wie bereits erwähnt wurde, ist die Puffereinrichtung MB mit ihrem Datenkopf ML ebenso wie jede der Anschlussgruppen LTG1 bis LTGn an das Koppelfeld K angeschlossen. Die Zeitmultiplexleitung m weist hierzu eine ausreichende Anzahl von Übertragungskanälen beider Übertragungsrichtungen auf.

Jede der zwischen der Puffereinrichtung MB einerseits und jeder der dezentralen Steuereinrichtungen andererseits verlaufende Datenverbindung weist je zwei Datenkanäle auf, und zwar je einen für je eine der beiden Übertragungsrichtungen. Diese Datenverbindungen verlaufen von der Puffereinrichtung MB weiter zum Zentralsteuerwerk. Wenngleich dieser Verlauf auch über die gemeinsame zentrale Datenleitung D führt, besteht doch je eine eigene Datenverbindung zwischen dem Zentralsteuerwerk ZW einerseits und jeder der dezentralen Steuereinrichtungen ZE1 bis ZEn andererseits.

Der Verlauf der Datenverbindungen über das Koppelfeld K ist nun so vorgesehen, dass jede der Zeitmultiplex-Zwischenleitungen innerhalb des Koppelfeldes sowie jeder Koppelfeldanschluss wenigstens einen Datenkanal führt. Jeder Koppelfeldanschluss, z.B. A, umfasst je einen Zeitmultiplexeingang, z.B. A1, zu einem Raumlage-Zeitlage-Vielfach der ersten Koppelstufe RZE und je einen Zeitmultiplexausgang, z.B. A2, von einem Raumlage-Zeitlage-Vielfach der letzten Koppelstufe RZA. Jeder Zeitmultiplexeingang und jeder Zeitmultiplexausgang führt je einen Datenkanal.

Ferner ist vorgesehen dass über die Datenverbindungen ein ständiger Datenaustausch zwischen dem zentralen Steuerwerk und den dezentralen Steuereinrichtungen und umgekehrt stattfindet. Das bedeutet, dass also über jeden Datenkanal ein ständiger Datenstrom fliesst. Hierbei handelt es sich um Befehle von dem zentralen Steuerwerk an die verschiedenen dezentralen Steuereinrichtungen sowie um Meldungen von diesen an das zentrale Steuerwerk. Sofern keine solchen Befehle und Meldungen zur Übertragung vorliegen, werden Überwachungsinformationen übertragen, die keine Befehle oder Meldungen darstellen, doch aber jeweils Informationen über Herkunft und Ziel enthalten, also über Herkunft vom Zentralsteuerwerk und als Zielangabe eine Angabe über die Ordnungsnummer der betreffenden Anschlussgruppe oder über Herkunft von einer bestimmten Anschlussgruppe und als Zielangabe das zentrale Steuerwerk. Ebenso wie diese Überwachungsinformationen enthalten auch Befehle und Meldungen jeweils zusätzlich Angaben über Herkunft und Ziel.

Ferner ist vorgesehen, dass die vom zentralen Steuerwerk zu den dezentralen Steuereinrichtungen übertragenen Überwachungsinformationen in den dezentralen Steuereinrichtungen jeweils veranlassen, dass diese ihrerseits Überwachungsinformationen von sich zum zentralen Steuerwerk hin aussenden. Alles dies geschieht über die erwähnten Datenverbindungen und zwar die zuvor genannten ersteren Überwachungsinformationen über den einen Datenkanal einer Datenverbindung und die zuvor genannten letzteren Überwachungsinformationen über den anderen der beiden Datenkanäle einer Datenverbindung.

Anhand dieses ständigen Datenaustausches und zwar anhand der erfolgreichen Übertragung der Überwachungsinformationen, die zwischen Befehlen und Meldungen wenigstens in bestimmten höchstzulässigen Zeitabständen eingeschoben werden, vermag das zentrale Steuerwerk die Funktionsfähigkeit aller Zeitmultiplexzwischenleitungen des Koppelfeldes und aller seiner Zeitmultiplexeingänge und Zeitmultiplexausgänge zu überwachen. Da nämlich jede dieser Zeitmultiplexzwischenleitungen und jeder dieser Zeitmultiplexeingänge und Zeitmultiplexausgänge wenigstens einen der genannten Datenkanäle führt, wird eine nicht funktionsfähige Zeitmultiplexleitung bzw. ein nicht funktionierender Zeitmultiplexeingang oder Zeitmultiplexausgang des Koppelfeldes für das zentrale Steuerwerk sofort erkennbar, weil von der Gesamtheit der Überwachungsinformationen die der jeweiligen Funktionsstörung entsprechenden Überwachungsinformationen nicht eintreffen. Da diese Überwachungsinformationen jeweils Informationen über Herkunft und Ziel enthalten, kann bei Ausbleiben von Überwachungsinformationen aus den übrigen, also weiterhin eintreffenden Überwachungsinformationen im zentralen Steuerwerk ermittelt werden, welche der Überwachungsinformationen es sind, die störungsbedingt ausbleiben, und hieraus kann ermittelt werden, welche Zeitmultiplexzwischenleitung oder welcher Zeitmultiplexeingang oder welcher Zeitmultiplexausgang von einer Störung betroffen wurde.

Um nachzuweisen, dass auch tatsächlich jede der Zeitmultiplexzwischenleitungen sowie jeder Zeitmultiplexeingang und jeder Zeitmultiplexausgang des Koppelfeldes K wenigstens je einen Datenkanal führt, ist noch aufzuzeigen, welchen Verlauf die Datenkanäle in ihrer Durchschaltung über das Koppelfeld K haben. Es ist vorgesehen, dass die Datenkanäle von dem zentralen Steuerwerk über den ihm zugeordneten, also mit der Zeitmultiplexleitung m beschalteten Zeitmultiplexeingang des Koppelfeldes und über die den dezentralen Steuereinrichtungen entsprechenden verschiedenen Zeitmultiplexausgänge zu den zugeordneten Anschlussgruppen und in diesen jeweils zu der betreffenden dezentralen Steuereinrichtung führen. Bei den zuletzt genannten Datenkanälen handelt es sich also um diejenigen zur Übertragung von Befehlen und Überwachungsinformationen vom zentralen Steuerwerk zu den einzelnen dezentralen Steuereinrichtungen. Ausserdem ist vorgesehen, dass die Datenkanäle, die zur Übertragung von Meldungen und Überwachungssignalen von den dezentralen Steuereinrichtungen zum zentralen Steuerwerk dienen, von den dezentralen Steuereinrichtungen über die ihnen entsprechenden Anschlussgruppen zu den ihnen jeweils individuell zugeordneten Zeitmultiplexeingängen des Koppelfeldes und über den mit der Zeitmultiplexleitung m beschalteten Zeitmultiplexausgang des Koppelfeldes zum zentralen Steuerwerk verlaufen.

Aus der in der Zeichnung gegebenen Darstellung ist nun zu erkennen, dass von jedem Raumlage-Zeitlage-Vielfach der ersten Koppelstufe je eine Zeitmultiplexzwischenleitung zu jedem Raumlage-Vielfach der zweiten Koppelstufe verläuft, und dass ebenso von jedem der letzteren je eine Zeitmultiplexzwischenleitung zu jedem Raumlage-Zeitlage-Vielfach der letzten Koppelstufe verläuft. Ferner sind je ein Zeitmultiplexeingang und je ein Zeitmultiplexausgang des Koppelfeldes einander zugeordnet und mit einer Zeitmultiplexzwischenleitung beschaltet, die jeweils zu einer der Anschlussgruppen LTG1 bis LTGn bzw. zur Puffereinrichtung MB führt. Es ist nun vorgesehen, dass die Raumlage-Zeitlage-Vielfache der ersten sowie der letzten Koppelstufe jeweils die gleiche Anzahl von Zeitmultiplexeingängen und Zeitmultiplexausgängen aufweisen. Die Zahl dieser Eingänge bzw. Ausgänge ist folglich gleich der Anzahl der Raumlage-Vielfache in der mittleren Koppelstufe. Die Anzahl der Zeitmultiplexeingänge jedes dieser Raumlage-Vielfache ist jeweils gleich der Anzahl ihrer Zeitmultiplexausgänge. Diese Anzahl ist wiederum gleich der Anzahl von Raumlage-Zeitlage-Vielfachen in der ersten Koppelstufe und der Anzahl der Raumlage-Zeitlage-Vielfache in der letzten Koppelstufe.

Es sei nun zur Vereinfachung der Beschreibung davon ausgegangen, dass das Koppelfeld K nur im dargestellten Umfange ausgebaut sei, und dass ausser der Puffereinrichtung insgesamt acht Anschlussgruppen an die insgesamt neun Zeitmultiplexanschlüsse des Koppelfeldes angeschlossen seien. Ferner sei angenommen, dass die Zeitmultiplexleitung m der Puffereinrichtung MB an den untersten Koppelfeldanschluss des Koppelfeldes K, also an den untersten Zeitmultiplexeingang des untersten Raumlage-Zeitlage-Vielfaches der ersten Koppelstufe und an den untersten Zeitmultiplexausgang des untersten Raumlage-Zeitlage-Vielfaches der letzten Koppelstufe angeschlossen sei. Dieser Zeitmultiplexeingang und dieser Zeitmultiplexausgang führen je neun Datenkanäle, nämlich je acht Datenkanäle zu und von den acht Anschlussgruppen LTG1 bis LTGn und einen Datenkanal, der vom zentralen Steuerwerk kommend über das Koppelfeld K verläuft und wieder zurück zum zentralen Steuerwerk führt. Die neun Datenkanäle, die über den untersten Zeitmultiplexeingang des untersten Raumlage-Zeitlage-Vielfaches der ersten Koppelstufe RZE verlaufen, verlaufen weiter aufgeteilt (aufgefächert) auf die drei ausgangsseitig an diesem Raumlage-Zeitlage-Vielfach angeschlossenen Zeitmultiplexzwischenleitungen. Jede dieser Zeitmultiplexzwischenleitungen führt drei Datenkanäle. Die übrigen Zeitmultiplexzwischenleitungen zwischen der ersten und zweiten Koppelstufe führen keine von denjenigen Datenkanälen, die von dem zentralen Steuerwerk zu den dezentralen Steuereinrichtungen verlaufen. Die von dem zentralen Steuerwerk zu den dezentralen Steuereinrichtungen führenden und jeweils über eines der drei Raumlage-Vielfache der zweiten Koppelstufe verlaufenden drei Datenkanäle (also drei Datenkanäle pro Raumlage-Vielfach der zweiten Koppelstufe, insgesamt also neun Datenkanäle) führen von hier über je eine der an dieses Raumlage-Vielfach ausgangsseitig angeschlossenen Zeitmultiplexzwischenleitungen. Folglich führt jede der Zeitmultiplexzwischenleitungen, die von der zweiten Koppelstufe zur dritten Koppelstufe verlaufen, je einen vom zentralen Steuerwerk zu den dezentralen Steuereinrichtungen führenden Datenkanäle. Ebenso führt auch jeder der Zeitmultiplexausgänge des Koppelfeldes K je einen dieser Datenkanäle.

Die von den dezentralen Steuereinrichtungen zum zentralen Steuerwerk führenden Datenkanäle verlaufen einzeln über je einen Zeitmultiplexeingang des Koppelfeldes K. Der unterste Zeitmultiplexausgang des untersten Raumlage-Zeitlage-Vielfaches der letzten Koppelstufe führt insgesamt neun Datenkanäle, die von den dezentralen Steuereinrichtungen zum zentralen Steuerwerk führen. Diese neun Datenkanäle liegen eingangsseitig an dem zuletzt genannten Raumlage-Zeitlage-Vielfach gleichmässig verteilt auf dessen drei Zeitmultiplexeingängen. Jede der Zeitmultiplexzwischenleitungen, die von einem der Raumlage-Vielfache der zweiten Koppelstufe zum untersten Raumlage-Zeitlage-Vielfach der letzten Koppelstufe verlaufen, führt also drei von denjenigen Datenkanälen, die von den einzelnen dezentralen Steuereinrichtungen zum zentralen Steuerwerk hin führen. Diese drei über eine der ausgangsseitig an jedes der Raumlage-Vielfache der zweiten Koppelstufe angeschlossenen Zeitmultiplexzwischenleitungen führenden Datenkanäle kommen bei dem betreffenden Raumlage-Vielfach eingangsseitig einzeln über die drei angeschlossenen Zeitmultiplexzwischenleitungen an. Auf jeder dieser zwischen der ersten und der zweiten Koppelstufe verlaufenden Zeitmultiplexzwischenleitung liegt also je einer derjenigen Datenkanäle, die von den dezentralen Steuereinrichtungen zum zentralen Steuerwerk hin führen.

Insoweit zusammenfassend ist also festzustellen, dass jede der Zeitmultiplexzwischenleitungen im Koppelfeld wenigstens je einen Datenkanal führt. Ebenso führt auch jeder Zeitmultiplexeingang und jeder Zeitmultiplexausgang des Koppelfeldes je einen Datenkanal.

Betrachtet man die mittlere Koppelstufe des Koppelfeldes als eine Schnittstelle innerhalb des Koppelfeldes, so sind die über den mit der Zeitmultiplexleitung m beschalteten Zeitmultiplexeingang des Koppelfeldes durchgeschalteten Datenkanäle über Zeitmultiplexzwischenleitungen des Koppelfeldes verlaufend zu jeder der an dieser Schnittstelle innerhalb des Koppelfeldes liegenden Zeitmultiplex-Koppeleinrichtungen aufgefächert. Ebenso sind die über den mit der Zeitmultiplexleitung m beschalteten Zeitmultiplexausgang des Koppelfeldes durchgeschalteten Datenkanäle von jeder der Zeitmultiplex-Koppeleinrichtungen an der genannten Schnittstelle herkommend zu diesem Zeitmultiplexausgang hin zusammengeführt.

Wie ausgeführt, stellt die Beschreibung hinsichtlich der Zahlenangaben über Zeitmultiplexeingänge, Zeitmultiplexausgänge und Zeitmultiplexzwischenleitungen eine Vereinfachung dar, die lediglich der besseren Verständlichkeit der Erläuterungen dienen soll. Tatsächlich ist die Anzahl der Koppelvielfache pro Koppelstufe und die Anzahl der Zwischenleitungen ausgangsseitig sowie eingangsseitig pro Vielfach grösser. Es ist auch möglich, insgesamt mehr als drei Koppelstufen im Koppelfeld vorzusehen. Zum Beispiel können die Vielfache in der mittleren Koppelstufe jeweils aus einer in sich dreistufigen Anordnung ersetzt werden.

**Patentansprüche**

1. Schaltungsanordnung für zentralgesteuerte Zeitmultiplex-Fernmeldevermittlungsanlagen, insbesondere PCM-Fernsprechvermittlungsanlagen, mit einem mehrstufigen, Zeitmultiplex-Eingänge und Zeitmultiplex-Ausgänge aufweisenden Koppelfeld (K), und mit einer Mehrzahl von einem Anschluss von Zeitmultiplex-Verbindungsleitungen, Analog-Verbindungsleitungen und/oder Analog-Teilnehmerleitungen dienenden Anschlusseinrichtungen (LTG1, LTG2, LTGn), von denen jede (z.B. LTG1) an einen Zeitmultiplexeingang (A1) und einen Zeitmultiplexausgang (A2) des Koppelfeldes angeschlossen ist, und mit wenigstens einem zentralen Steuerwerk (ZW) und mehreren, den Anschlusseinrichtungen (LTG1, LTG2, LTGn) individuell zugeordneten dezentralen Steuereinrichtungen (TE1, TE2, TEn), die mit dem Steuerwerk (ZW) über Datenkanäle (m . . .) in Verbindung stehen, die über das Koppelfeld (K) durchgeschaltet werden, ständig in übertragungsbereitem Betriebszustand erhalten werden und einen Verlauf über das Koppelfeld (K) aufweisen, aufgrund dessen jeder der Zeitmultiplex-Eingänge (A1) und jeder der Zeitmultiplex-Ausgänge (A2) des Koppelfeldes (K) und jede seiner Zeitmultiplex-Zwischenleitungen wenigstens je einen Datenkanal führt, und mit einer dem Steuerwerk (ZW) zugeordneten und mit ihm verbundenen Steuerwerk-Anschlusseinrichtung (MB/ML), die ebenso wie die anderen Anschlusseinrichtungen (LTG1, LTG2, LTGn) mit dem Koppelfeld (K) verbunden ist und über die das Steuerwerk (ZW) mit den Steuereinrichtungen (TE1, TE2, TEn) der anderen Anschlusseinrichtungen (LTG1, LTG2, LTGn) in einem sämtliche Datenkanäle in Anspruch nehmenden und der Überwachung der Funktionsfähigkeit sämtlicher Zeitmultiplex-Zwischenleitungen des Koppelfeldes (K) dienenden Datenaustausch steht, dadurch gekennzeichnet, dass das Koppelfeld (K) aus unidirektionalen Zeitmultiplex-Koppeleinrichtungen (RZE, R, RZA) und unidirektionalen Zeitmultiplex-Zwischenleitungen aufgebaut ist, dass die Steuerwerk-Anschlusseinrichtung (MB/ML) über einen Zeitmultiplex-Eingang und einen Zeitmultiplex-Ausgang des Koppelfeldes (K) nur mit je einer Zeitmultiplex-Koppeleinrichtung der ersten Koppelstufe (RZE) und einer Zeitmultiplex-Koppeleinrichtung der letzten Koppelstufe (RZA) verbunden ist, dass die von dem Steuerwerk (ZW) zu den Steuereinrichtungen (TE1, TE2, TEn) durchgeschalteten Datenkanäle über Zeitmultiplex-Zwischenleitungen verlaufen, die von der mit der Steuerwerk-Anschlusseinrichtung (MB/ML) verbundenen Zeitmultiplex-Koppeleinrichtung der ersten Koppelstufe (RZE) zu jeder der an einer bestimmten Schnittstelle (R) innerhalb des Koppelfeldes (K) liegenden Zeitmultiplex-Koppeleinrichtungen aufgefächert sind, dass die von den Steuereinrichtungen (TE1, TE2, TEn) zu dem Steuerwerk (ZW) durchgeschalteten Datenkanäle über Zeitmultiplex-Zwischenleitungen verlaufen, die von jeder der genannten Zeitmultiplex-Koppeleinrichtungen an der bestimmten Schnittstelle (R) her zu dem mit der Steuerwerk-Anschlusseinrichtung (MB/ML) verbundenen Zeitmultiplex-Ausgang der Zeitmultiplex-Koppeleinrichtung der letzten Koppelstufe (RZA) zusammenlaufen, dass die von den Steuereinrichtungen (TE1, TE2, TEn) zu dem Steuerwerk (ZW) durchgeschalteten Datenkanäle über Zeitmultiplex-Zwischenleitungen verlaufen, die von jeder der Zeitmultiplex-Koppeleinrichtungen der ersten Koppelstufe (RZE) zu allen an der bestimmten Schnittstelle (R) innerhalb des Koppelfeldes (K) liegenden Zeitmultiplex-Koppeleinrichtungen aufgefächert sind, und dass die von dem Steuerwerk (ZW) zu den Steuereinrichtungen (TE1, TE2, TEn) durchgeschalteten Datenkanäle über Zeitmultiplex-Zwischenleitungen verlaufen, die von sämtlichen Zeitmultiplex-Koppeleinrichtungen an der bestimmten Schnittstelle (R) innerhalb des Koppelfeldes (K) her zu jeder der Zeitmultiplex-Koppeleinrichtungen der letzten Koppelstufe (RZA) zusammenlaufen.

2. Schaltungsanordnung nach Anspruch 1, dadurch gekennzeichnet, dass eine dem Koppelfeld (K) zugeordnete, von dem ebenfalls mit einem Koppelfeldanschluss verbundenen Steuerwerk (ZW) Koppelfeldeinstelldaten empfangende und aufgrund derselben Nachrichtenverbindungen über Koppelfeld (K) durchschaltende Koppelfeldeinstelleinrichtung (KE) Koppelfeldeinstelldaten zur Durchschaltung der Datenkanäle gespeichert enthält und auf Befehl des Steuerwerks (ZW) eine Durchschaltung dieser Datenkanäle bei Betriebsbeginn oder nach Auftreten einer Störung anhand der gespeicherten Koppelfeldeinstelldaten durchführt.

**Revendications**

1. Montage pour installations de télécommunications à multiplexage temporel, à commande centralisée, notamment des installations de téléphonie MIC, comportant un champ de couplage (K) à plusieurs étages, possédant des entrées de multiplexage temporel et des entrées de sortie de multiplexage temporel, et comportant une multiplicité de dispositifs de raccordement (LTG1, LTG2, LTGn), qui servent au raccordement de lignes de liaison à multiplexage temporel, de lignes de liaison analogiques et/ou de lignes d'abonnés analogiques et dont chacune (par exemple LTG1) est raccordée à une entrée de multiplexage temporel (A1) et à une sortie de multiplexage temporel (A2) du champ de couplage, et comportant au moins une unité de commande centrale (ZW) et plusieurs dispositifs de commande décentralisés (TE1, TE2, TEn), associés individuellement aux dispositifs de raccordement (LTG1, LTG2, LTGn), et qui sont reliés à l'unité de commande (ZW) par l'intermédiaire de canaux de transmission de données (m . . .) qui sont interconnectés directement par l'intermédiaire du champ de couplage (K), sont reçus en permanence à l'état de fonctionnement prêt pour la transmission et ont dans le champ de couplage (K) un cheminement, sur la base duquel chacune des entrées de multiplexage temporel (A1) et chacune des sorties de multiplexage temporel (A2) du champ de couplage (K) et chacune des lignes intermédiaires de multiplexage temporel véhiculent au moins un canal respectif de transmission de données, et comportant un dispositif (MB/ML) de raccordement de l'unité de commande, qui est associé à l'unité de commande (ZW) et qui est relié à cette dernière et est raccordé tout comme les autres dispositifs de raccordement (LTG1, LTG2, LTGn) au champ de couplage (K) et établit par l'intermédiaire de l'unité de commande (ZW), avec les dispositifs de commande (TE1, TE2, TEn) des autres dispositifs de raccordement (LTG1, LTG2, LTGn) un échange de données faisant intervenir tous les canaux de transmission de données et servant au contrôle de l'aptitude de fonctionnement de toutes les lignes intermédiaires de multiplexage temporel du champ de couplage (K), caractérisé par le fait que le champ de couplage (K) est constitué par des dispositifs unidirectionnels de couplage à multiplexage temporel (RZE, R, RZA) et par des lignes intermédiaires unidirectionnelles de multiplexage temporel, que le dispositif (MB/ML) de raccordement de l'unité de commande est relié par l'intermédiaire d'une entrée de multiplexage temporel et d'une sortie de multiplexage temporel du champ de couplage (K) uniquement à un dispositif respectif de couplage à multiplexage temporel du premier étage de couplage (RZE) et à un dispositif de couplage à multiplexage temporel du dernier étage de couplage (RZA), que les canaux de transmission de données, qui sont interconnectés par l'unité de commande (ZW) à l'un des dispositifs de commande (TE1, TE2, TEn), sont acheminés par l'intermédiaire de lignes intermédiaires de multiplexage temporel, qui sont réparties par le dispositif de couplage à multiplexage temporel, relié au dispositif de raccordement (MB/ML) de l'unité de commande du premier étage de couplage (RZE), vers les différents dispositifs de couplage à multiplexage temporel situés au niveau d'une interface déterminée (R) à l'intérieur du champ de couplage (K), que les canaux de transmission de données, interconnectés directement par les dispositifs de commande (TE1, TE2, TEn) à l'unité de commande (ZW), sont acheminés par l'intermédiaire de lignes intermédiaires de multiplexage temporel, qui convergent à partir de chacun desdits dispositifs de couplage à multiplexage temporel situés au niveau de l'interface déterminée (R) en direction de la sortie à multiplexage temporel, reliée au dispositif de raccordement (MB/ML) de l'unité de commande, du dispositif de couplage à multiplexage temporel, du dernier étage de couplage (RZE), que les canaux de transmission de données, interconnectés directement par les dispositifs de commande (TE1, TE2, TEn) à l'unité de commande (ZW), sont acheminés par l'intermédiaire de lignes intermédiaires de multiplexage temporel, qui se répartissent à partir de chacun des dispositifs de couplage à multiplexage temporel du premier étage de couplage (RZE) en direction de tous les dispositifs de couplage à multiplexage temporel situés au niveau de l'interface déterminée (R) à l'intérieur du champ de couplage (K), et que les canaux de transmission de données interconnectés directement par l'unité de commande (ZW) aux dispositifs de commande (TE1, TE2, TEn), sont acheminés par l'intermédiaire de lignes intermédiaires de multiplexage temporel qui convergent, à partir de tous les dispositifs de couplage à multiplexage temporel situés au niveau de l'interface déterminée (R), à l'intérieur du champ de couplage (K), en direction des différents dispositifs de couplage à multiplexage temporel du dernier étage de couplage (RZE).

2. Montage selon la revendication 1, caractérisé par le fait qu'un dispositif (KE) de réglage du champ de couplage, qui est associé au champ de couplage (K) et reçoit des données de réglage du champ de couplage à partir de l'unité de commande (ZW) reliée également à un raccord du champ de couplage, et qui, sur la base de ces données, interconnecte directement des communications d'informations par l'intermédiaire du champ de couplage (K), contient, mémorisées en lui, des données de réglage du champ de couplage permettant l'interconnexion directe des canaux de transmission de données, et exécute, sur ordre de l'unité de commande (ZW1), une interconnexion directe de ces canaux de transmission de données au début du fonctionnement ou après l'apparition d'une perturbation, sur la base des données mémorisées de réglage du champ de couplage.

**Claims**

1. A circuit arrangement for centrally controlled t.d.m. telecommunications exchange systems, in particular PCM telephone exchange systems, with a multi-stage switching network (K) which has t.d.m. inputs and t.d.m. outputs, and with a plurality of connection devices (LTG1, LTG2, LTGn) which serve to connect t.d.m. connection lines, analogue connection lines and/or analogue subscriber lines, each of which (e.g. LTG1) is connected to a t.d.m. input (A1) and a t.d.m. output (A2) of the switching network, and with at least one central control unit (ZW) and with a plurality of decentral control devices (TE1, TE2, TEn) which are individually assigned to the connection devices (LTG1, LTG2, LTGn) and which are connected to the control unit (ZW) via data channels (m . . .) which are switched through via the switching network (K), are constantly maintained in readiness for transmission, and which extend via the switching network (K) in such manner that each of the t.d.m. inputs (A1) and each of the t.d.m. outputs (A2) of the switching network (K), and each of its t.d.m. intermediate lines carries at least one data channel, and with a control unit – connection device (MB/ML) which is assigned to the control unit (ZW) and is connected thereto and which is connected to the switching network (K) in the same way as the other connection devices (LTG1, LTG2, LTGn), and via which the control unit (ZW) exchanges data with the control devices (TE1, TE2, TEn) of the other connection devices (LTG1, LTG2, LTGn) in a system of data exchange which includes all the data channels and which serves to monitor the functioning capacity of all the t.d.m. intermediate lines of the switching network (K), characterised in that the switching network (K) is constructed from uni-directional t.d.m. switching devices (RZE R RZA) and uni-directional t.d.m. intermediate lines, that the control unit connection device (MB/ML) is connected via a t.d.m. input and a t.d.m. output of the switching network (K) only to one t.d.m. switching device of the first switching stage (RZE) and one t.d.m. switching device of the last switching stage (RZA), that the data channels, which are switched through from the control unit (ZW) to the control devices (TE1, TE2, TEn) extend via t.d.m. intermediate lines which extend out from the t.d.m. switching device, connected to the control unit connection device (MB/ML), of the first switching stage (RZE) to each of the t.d.m. switching devices which are located at a specific interface (R) within the switching network (K), that the data channels which are switched through from the control devices (TE1, TE2, TEn) to the control unit (ZW) extend via t.d.m. intermediate lines which converge from each of the aforementioned t.d.m. switching devices at the specific interface (R), to the t.d.m. output, which is connected to the control unit connection device (MB/ML), of the t.d.m. switching device of the last switching stage (RZA), that the data channels which are switched through from the control devices (TE1, TE2, TEn) to the control unit (ZW) extend via t.d.m. intermediate lines which extend out from each of the t.d.m. switching devices of the first switching stage (RZE) to all the t.d.m. switching devices which are located at the specific interface (R) within the switching network (K), and that the data channels which are switched through from the control unit (ZW) to the control devices (TE1, TE2, TEn) extend via t.d.m. intermediate lines which converge from all the t.d.m. switching devices at the specific interface (R) within the switching network (K), to each of the t.d.m. switching devices of the last switching stage (RZA).

2. A circuit arrangement as claimed in claim 1, characterised in that a switching network setting-up device (KE) which is assigned to the switching network (K), receives items of switching network setting-up data from the control unit (ZW) which is likewise connected to a switching network terminal, and on the basis of said data switches through communications connections via the switching network (K), stores items of switching network setting-up data for the switch-through of the data channels, and at the command of the control unit (ZW) switches through these data channels at the beginning of the operation or following the occurrence of a fault, on the basis of the stored items of switching network setting-up data.